# EUROPÄISCHE PATENTSCHRIFT

(11) **EP 1 740 389 B1**
(45) Veröffentlichungstag und Bekanntmachung des Hinweises auf die Patenterteilung: **09.01.2013**
(21) Anmeldenummer: 05736248.5
(22) Anmeldetag: 19.04.2005
(51) Int. Cl.: B41J 3/407, B41J 25/316

(54) **VERFAHREN UND STEUEREINHEIT FÜR EINEN ETIKETTENDRUCKER**
METHOD AND CONTROL UNIT FOR A LABEL PRINTER
PROCEDE ET UNITE DE COMMANDE POUR IMPRIMANTE POUR ETIQUETTES

(30) Priorität: 20.04.2004 DE 102004019074
(43) Veröffentlichungstag der Anmeldung: 10.01.2007
(73) Patentinhaber: AVERY DENNISON CORPORATION, Pasadena, CA 91103-3596 (US)
(72) Erfinder: LENKL, Johannes, 85356 Freising (DE)
(74) Vertreter: Eisenführ, Speiser & Partner
(86) Internationale Anmeldenummer: PCT/EP2005/004178
(87) Internationale Veröffentlichungsnummer: WO 2005/102717

(56) Entgegenhaltungen:
- US-A- 4 709 242
- PATENT ABSTRACTS OF JAPAN Bd. 1999, Nr. 10, 31. August 1999 (1999-08-31) & JP 11 138941 A (TOSHIBA TEC CORP), 25. Mai 1999 (1999-05-25)

## Beschreibung

Die Erfindung betrifft ein Verfahren zum Steuern eines Etikettendruckers, insbesondere eines Thermotransferdruckers, zum Bedrucken von einen RFID(Radio Frequency Identification)-Abschnitt aufweisenden Etiketten mit den Schritten: Zuführen von auf einer Etikettenträgerbahn aufeinanderfolgend angeordneten Etiketten, Aufsetzen eines Druckkopfes des Etikettendruckers auf ein in dessen Wirkbereich einlaufendes, zu bedruckendes Etikett, Bedrucken des Etiketts mit einem ausgewählten Druckbild und Abheben des Druckkopfes von dem Etikett. Die Erfindung betrifft ferner einen Etikettendrucker zum Bedrucken solcher Etiketten mit einer programmtechnisch eingerichteten Steuereinheit zum Ausführen eines solchen Verfahrens.

Etiketten der eingangs genannten Art sind bekannt und finden in der Praxis weitreichende Anwendung. Unter Etiketten mit einem RFID-Abschnitt (nachfolgend kurz RFID-Etiketten genannt) werden im Sinne der Erfindung Etiketten verstanden, die eine vorzugsweise kontaktfrei elektronisch auslesbare Information speichern können. Die Information wird typischerweise mittels elektromagnetischer Wellen im Funk- oder Mikrowellenbereich unterschiedlicher Frequenzbänder, wie das HF-Band (6 MHz bis 30 MHz), das UHF-Band (30 MHz bis 300 MHz) oder das UHF-Band (300 MHz bis 3 GHz) ausgelesen. Es gibt eine Vielzahl bekannter, auch als Transponder bezeichneter Speichermittel, die zum Speichern von Information für die Anwendung in RFID-Etiketten infrage kommen. Ihre Aufgabe es ist ein elektromagnetisch eingestrahltes Signal mit der in irgendeiner Weise kodierten Information wieder abzustrahlen oder zurückzusenden (Antwortsignal). Es können hiefür z. B. integrierte Elektronikbausteine (Chips) mit kleinen Antennen, bis hin zu - im einfachsten Fall - Spulen mit einer bestimmten Größe und einer bestimmten Anzahl von Windungen also sowohl passive als auch aktive RFID-Komponenten zum Einsatz kommen. Während einige die Information unänderbar beinhalten sind andere vorrübergehend oder dauerhaft beschreibbar. Abhängig von dem Frequenzband und insbesondere von der Art des Speichermediums und der angeschlossenen Elektronik auf dem Chip können verschiedene Reichweiten des RFID-Antwortsignals erzielt werden.

Damit solche elektronisch auslesbaren RFID-Etiketten ferner auch optisch, beispielsweise durch eine Person oder einen Barcodescanner, auslesbar sind, werden diese durch einen Etikettendrucker in bekannter Weise bedruckt. Vorzugsweise werden hierfür wegen der geringen mechanischen Beanspruchung der Etiketten und zugleich der hohen Lebensdauer des Drucks sogenannte Thermotransferdrucker verwendet. Beim Thermotransferdruck wird eine Farbe (vorzugsweise schwarz) oder mehrere Farben von einem Thermotransferfarbband mittels eines beheizbaren Druckkopfes durch Aufschmelzen auf die Etikettenoberfläche gemäß der Druckeransteuerung aufgetragen. Während des Druckens wird das Thermotransferfarbband unter dem Druckkopf hindurchgezogen, wodurch das gewünschte Druckbild erzeugt wird.

Solche RFID-Etiketten werden beispielsweise an Waren, Verpackungskartons oder Paletten angebracht und finden dort als Wareninformationsträger oder Transportinformationsträger Anwendung. Es ist möglich auf solchen Etiketten verschiedenste Informationen zu speichern, wle z. B. die Adresse und den Namen des Empfängers oder des Kunden, für den die Ware bestimmt ist, Produktinformation oder dgl. Diese information kann auf einfache Weise beispielsweise von einem Spediteur oder einem Inventar ausgelesen werden, wodurch beispielsweise der Aufenthaltsort, der Transportweg der Ware oder ähnliches jederzeit nachvollzogen werden kann. Das Auslesen kann vollautomatisch geschehen, indem beispielsweise im Wareneingangsbereich eine RFID-Leseeinheit aufgebaut ist, mit der das Eintreffen der Ware sowie sonstige Information dieser Ware während des Passieren des Etiketts bei der Einlieferung registriert bzw. ausgelesen werden kann.

Die in ein solches Etikett eingebrachten Speichermittel haben meist sehr kleine Abmessungen Im Millimeterbereich. Daher können Sie in flachen Kunststoff- oder Paplerbändem untergebracht werden. Jedoch sind diese elektronischen Speichermittel und insbesondere die elektronischen Kontakte und Antennen relativ empfindlich und können beim Biegen des Etiketts oder durch lokal auf das Etikett aufgebrachten Druck beschädigt werden. Daher ist insbesondere beim Bedrucken der Etiketten große Sorgfalt zu verwenden.

Aus dem japanischen Dokument mit der Publikationsnummer 11138941 ist eine Druckeinheit bekannt, welche in der Lage, ist den Druckkopf abhängig von einem ersten programmierbaren Parameter im Hinblick auf die Relativlage des RFID Abschnitts abzuheben bzw. nicht aufzusetzen. Jedoch geht aus diesem Dokument nicht hervor, dass die Druckgeschwindigkeit, insbesondere bei hohen Druckgeschwindigkeiten, hinsichtlich des Abhebens des Druckkopfes problematisch sein könnte.

Aufgabe der Erfindung ist es dem gemäß, ein Verfahren und einen Etikettendrucker zum Bedrucken von einen RFID-Abschnitt aufweisenden Etiketten bereitzustellen, welches/welcher die Gefahr von Beschädigungen der elektronischen Speichermittel in dem RFID-Etikett minimiert.

Die Aufgabe wird erfindungsgemäß durch ein Verfahren und ein Etikettendrucker der eingangs genannten Art mit kennzeichnenden Merkmalen des Anspruchs 1 bzw. des Anspruchs 12 gelöst. Die Ansprüche 2 bis 11 haben vorteilhafte Ausgestaltungen und Weiterentwicklungen dieser Erfindung zum Gegenstand:

Nicht immer ist die Position des RFID-Abschnitts auf dem Etikett dieselbe. Diesem Umstand trägt das Bereithalten eines ersten programmierbaren Parameters, der eine erste information über die Relativlage des RFID-Abschnitts auf dem zu bedruckenden Etikett beinhaltet, Rechnung. Unter "programmierbarer Parameter" im Sinne der Erfindung wird jeder vor dem Start des Programms bzw. der Ausführung des Verfahrens einzugebende Wert zur Ablaufsteuerung verstanden. Programmierbar wird synonym mit eingebbar oder auswählbar verwendet. Abhängig von dem Design des gerade zu bedruckenden Etiketts kann auf diese Weise die Lage des RFID-Abschnitts beispielsweise bezüglich des Etikettanfangs aus dem Parameter abgeleitet werden und somit der Druckkopf in dem Bereich des RFID-Abschnitts von dem Etikett abhoben werden, so dass dieser keinen Druck auf das Etikett in diesem RFID-Abschnitt ausübt. Im Falle eines am Anfang des Etiketts angeordneten RFID-Abschnitts würde der Druckkopf in Abhängigkeit von dem entsprechenden Parameter zunächst gar nicht erst auf das Etikett aufgesetzt werden. Hierdurch wird nicht nur eine Beschädigung der Speichereinheit in dem RFID-Abschnitt vermieden sondern zugleich auch der Druckkopf selbst vor Beschädigung geschützt, wodurch die Lebensdauer des Druckkopfes erheblich verlängert werden kann.

Erst nachdem der RFID-Abschnitt den Druckkopf passiert hat, kann dieser wieder auf das Etikett aufgesetzt werden, um den Druckvorgang in einen bedruckbaren Abschnitt fortzusetzen. Dies geschieht vorzugsweise nach einer vorbestimmten Hubdauer von dem durch den ersten programmierbaren Parameter bestimmten Abheben bzw. Nicht-Aufsetzen an gerechnet. Im Gegensatz zu dem programmierbaren Parameter ist mit "vorbestimmter Hubdauer" eine fest programmierte Größe gemeint, die nicht individuell vor dem Start bzw. der Ausführung des Verfahrens eingebbar ist und somit von Programmstart zu Programmstart nicht verändert werden kann. Das Verfahren unter Verwendung einer vorbestimmten Hubdauer bietet sich an, wenn typischerweise immer Speichermittel gleicher Abmessung und somit RFID-Abschnitt gleicher Länge verwendet werden.

In einer anderen bevorzugten Ausführungsform wird das Aufsetzen des Druckkopfes nach dem Passieren des RFID-Abschnitts mittels eines zweiten programmierbaren Parameters gesteuert. Dieser beinhaltet eine zweite Information über die relative Lage des RFID-Abschnitts auf dem zu bedruckenden Etikett. Die zweite Information kann beispielsweise den Abstand des Endes des RFID-Abschnitts zu dem Anfang des Etiketts bezüglich der Zuführrichtung oder den Abstand des Endes des RFID-Abschnitts zu dem Anfang des RFID-Abschnitts angehen.

Vorteilhaft ist es, das Zuführen des Etiketts durch einen Sensor zu überwachen. Hierfür kommt vorzugsweise ein optischer Sensor zum Einsatz. Es ist grundsätzlich aber auch möglich hierfür einen mechanischen, akustischen, elektrischen oder elektromagnetischen Sensor zu verwenden. Insbesondere kann eine RFID-(Schreib- und) Leseeinheit hierfür verwendet werden.

Der Sensor gibt vorzugsweise ein Signal aus, anhand dessen das Einlaufen des Etikettenanfangs in den Wirkbereich des Druckkopfes ermittelt wird. Von diesem Einlaufen an wird ein zu dem ersten Parameter proportionaler Abstand eingehalten, bevor der Druckkopf von dem Etikett abgehoben wird. Diese Ausführungsform des Verfahrens weist den Vorteil auf, dass beispielsweise im Fall einer Vielzahl von auf einer Etikettenträgerbahn aufeinanderfolgend angeordneten zugeführten Etiketten ein beschädigungsfreies Bedrucken der Etiketten auch dann sichergestellt ist, wenn die Etiketten nicht immer gleiche Abstände zueinander aufweisen.

Besonders bevorzugt wird der Druckkopf am Anfang eines leeren Bereiches des ausgewählten Druckbildes von dem zu bedruckenden Etikett abgehoben, soweit er in Abhängigkeit von dem ersten Parameter nicht bereits abgehoben ist und in Abhängigkeit von der vorbestimmten Dauer bzw. dem zweiten Parameter nicht wieder aufgesetzt wurde, und am Ende des leeren Bereichs des ausgewählten Druckbildes wieder aufgesetzt wird, soweit er in Abhängigkeit von dem ersten Parameter und von der vorbestimmten Dauer bzw. dem zweiten Parameter nicht abgehoben zu sein hat.

Ebenfalls vorteilhaft ist es bei einem Thermotransferdrucker die Transporteinrichtung für das Thermotransferfarbband in Abhängigkeit von dem ersten Parameter anzuhalten und in Abhängigkeit von der vorbestimmten Dauer bzw. dem zweiten Parameter wieder anzufahren. Und besonders vorteilhaft im Hinblick auf einen minimalen Verbrauch an Thermotransferfarbband ist es, das Anhalten und Wiederanfahren der Transporteinrichtung für das Thermotransferfarbband beider vorgenanter vorteilhafter Ausführungsformen dergestalt zu kombinieren, dass es jeweils mit dem Abheben des Druckkopfes von dem zu bedruckenden Etikett bzw. mit dem Aufsetzen des Druckkopfes auf das zu bedruckende Etikett erfolgt.

Insbesondere bei sehr hohen Druckgeschwindigkeiten ist es vorteilhaft, die Transporteinrichtung für das Thermotransferfarbband nur dann anzuhalten, wenn eine anhand der Zuführgeschwindigkeit der Etiketten und der Länge des leeren Bereichs rechnerisch ermittelte Haltezeit einen vorbestimmte Minimalwert nicht unterschreitet. Die Haltezeit kann nicht beliebig gekürzt werden, da insbesondere bei sehr hoher Druckgeschwindigkeit, mit der die Transportgeschwindigkeit das Transferband synchronisiert werden muss, große Beschleunigungen und aufgrund der nicht zu vernachlässigenden Masse des auf eine Vorratsrolle aufgewickelten Thermotransferfarbbandes auch große Kräfte beim Anfahren und Abbremsen erforderlich macht. Der vorbestimmte Minimalwert ist demnach eine auf den Etikettendrucker abgestimmte, fest programmierte Größe, die die benötigte Zeit zum Beschleunigen und Abbremsen des Thermotransferfarbbandes bzw. der dieses Farbband antreibenden Transporteinrichtung berücksichtigt.

Das erfindungsgemäße Verfahren sowie der erfindungsgemäß Etikettendrucker kann sowohl zum Bedrucken von Etiketten mit einem RFID-Abschnitt angewendet werden, die einzeln eingezogen werden als auch für solche Etiketten, die auf einer Etikettenträgerbahn aufeinanderfolgend angeordnet sind. Die Etiketten auf einer Etikettenträgerbahn können unter Einhaltung von gleichen oder ungleichen Abständen oder unmittelbar aneinander anschließend angeordnet sein. Solche Etiketten sind üblicherweise mittels einer an ihrer zur Etikettenträgerbahn weisenden Seite zumindest teilweise aufgebrachten Klebeschicht auf der Etikettenträgerbahn gehalten, wobei die Etikettenträgerbahn auf ihrer zu dem Etikett weisenden Seite mit einer Beschichtung versehen ist, die einerseits ein Anhaften des Etiketts mit der Klebeschicht und andererseits ein Ablösen des Etiketts ohne Zerstörung der Klebeschicht ermöglicht. Die Etiketten werden nach dem Bedrucken und Codieren der Speichermittel mittels einer Lese- und/oder Schreibeinheit typischerweise über eine Spendekante abgegeben und auf das zu etikettierende Produkt, die Verpackung oder dergleichen appliziert.

Weitere Aufgaben, Merkmale und Vorteile der Erfindung werden nachfolgend anhand von Ausführungsbeispielen mit Hilfe der Figuren näher erläutert. Es zeigen:
- Fig. 1: eine schematische Seitenansicht des erfindungsgemäßen Etikettendruckers mit einem auf ein zu bedruckendes Etikett aufgesetzten Druckkopf;
- Fig. 2: eine weitere schematische Seitenansicht des erfindungsgemäßen Etikettendrucker gemäß Fig. 1 mit dem Druckkopf in einer von dem zu bedruckenden Etikett abgehobenen Position;
- Fig. 3A: ein beispielhaftes Druckbild;
- Fig. 3B: eine schematische Darstellung eines mit dem Druckbild gemäß Fig. 3A mittels einem bekannten Etikettendrucker bedruckten RFID-Etiketts; sowie
- Fig. 3C: eine schematische Darstellung eines mit dem Druckbild gem. Fig. 3A mittels einem erfindungsgemäßen Etikettendrucker bedruckten RFID-Etiketts.

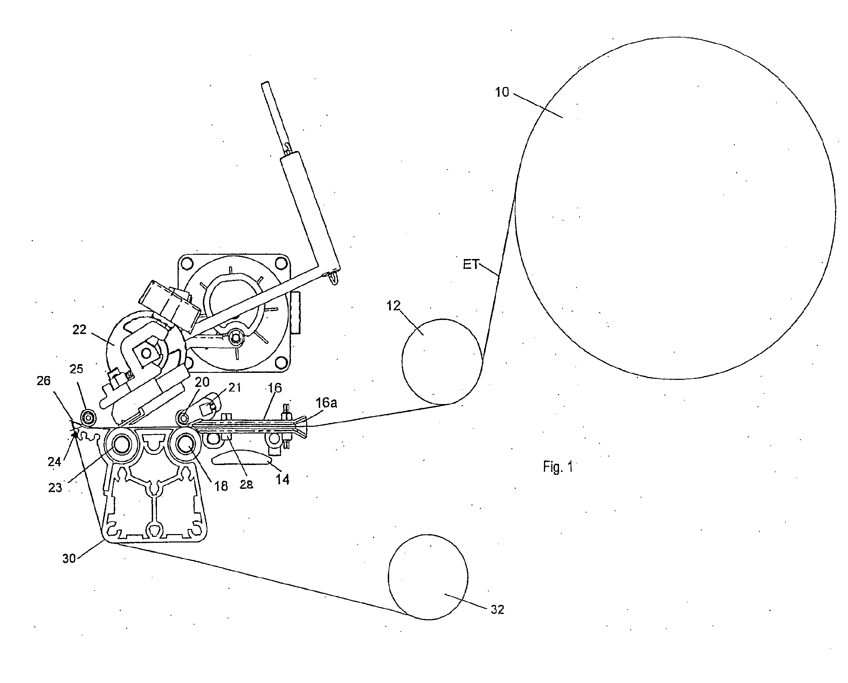

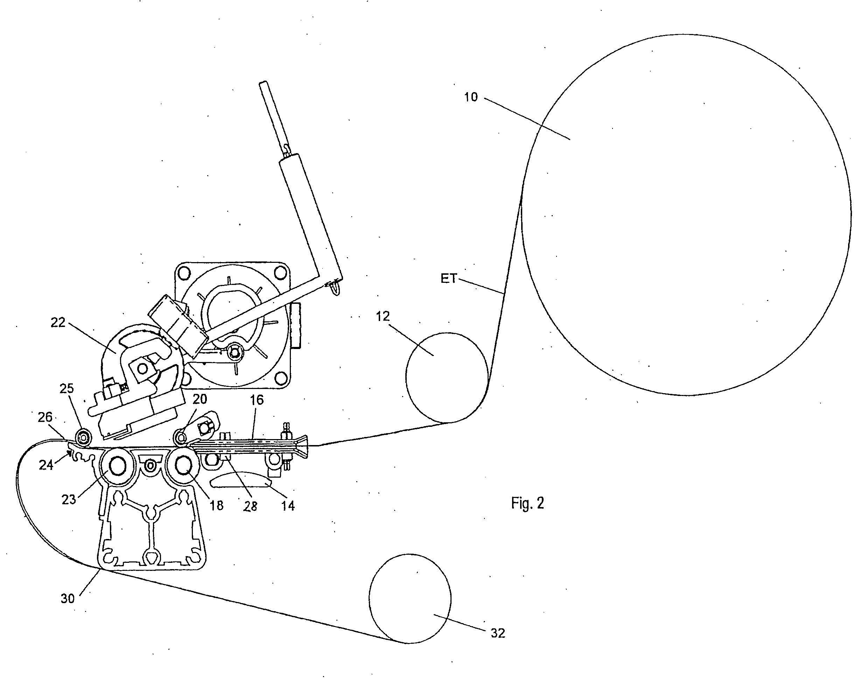

In Fig. 1 und 2 ist ein erfindungsgemäßer Etikettendrucker, der zur Durchführung des erfindungsgemäßen Verfahrens geeignet ist, jeweils schematisch in einer Seitenansicht wiedergegeben. Ein in der Regel den Etikettendrucker umgebendes Gehäuse ist aus Gründen der Übersichtlichkeit nicht dargestellt.

Der erfindungsgemäße Etikettendrucker weist als wesentliche Bestandteile eine Vorratsrolle 10 auf, die durch die aufgewickelte Etikettenträgerbahn ET gebildet ist und deren nicht weiter dargestellte Achse zumindest annähernd horizontal verläuft. Auf der Etikettenträgerbahn ET sind in regelmäßigen Abständen nicht gezeigte Etiketten aufgebracht, die einen RFID-Abschnitt sowie einen bedruckbaren Abschnitt bzw. Aufdruckträgerabschnitt aufweisen. Sowohl der RFID-Abschnitt als auch der Aufdruckträgerabschnitt sind nicht näher dargestellt.

Die mit den Etiketten versehene Etikettenträgerbahn ET wird von der Vorratsrolle 10 abgezogen, in etwa vertikal nach unten geführt und um eine Umlenkrolle 12 herumgeführt, deren Achse ebenfalls zumindest annähernd horizontal ausgerichtet ist. Die Umlenkrolle 12 richtet die zumindest annähernd vertikal auf sie zugeführte Etikettenträgerbahn ET in etwa horizontal aus. Sie ist in der Regel am Ende eines um die Achse der Vorratsrolle 10 schwenkbaren und federnd vorgespannten Arm (Tänzer, nicht dargestellt) gelagert und dient somit zugleich zum Straffen der Etikettenträgerbahn bei nachlassender Zugspannung. In Förderrichtung der Etikettenträgerbahn ET ist nach der Umlenkrolle 12 eine RFID-Lese- und/oder Schreibeinheit 14 vorgesehen. Die RFID-Lese- und/oder Schreibeinheit 14 wird durch eine Antenne gebildet, welche unterhalb der in diesem Bereich horizontal verlaufenden Etikettenträgerbahn ET angeordnet ist. Diese RFID-Lese- und/oder Schreibeinheit 14 kann gleichzeitig eine Prüfeinheit bilden, welche den RFID-Abschnitt eines Etiketts, welches sich auf der Etikettenträgerbahn ET befindet, auf Defekte prüft. Grundsätzlich besteht hierbei die Möglichkeit, dass der RFID-Abschnitt des Etiketts bereits mit Informationen versehen ist, die durch keine weiteren Informationen ergänzt werden müssen. In einem solchen Fall ist die RFID-Lese- und/oder Schreibeinheit 14 lediglich eine Leseeinheit. Sind dagegen Informationen auf dem RFID-Abschnitt des Etiketts aufzubringen, so handelt es sich bei der RFID-Lese- und/oder Schreibeinheit um eine RFID-Lese- und Schreibeinheit.

Im Bereich der RFID-Lese- und Schreibeinheit ist ferner eine Lichtschranke 28 als optischer Sensor vorgesehen, die das Passieren eines Etiketts bzw. genauer eines Etikettenanfangs registriert und an die nicht dargestellte Steuereinheit (Drucksteuerung) signalisiert. Anhand dieses Signals und der bekannten Transportgeschwindigkeit kann das Einlaufen des Etikettenanfangs in den Wirkbereich eines stromabwärts angeordneten Druckkopfes 22 ermittelt werden. Die Lichtschranke kann, anders als in Fig. 1 und 2 gezeigt, auch horizontal und/oder an einer anderen Stelle entlang der Etikettenträgerbahn, beispielweise näher am Druckkopf angeordnet sein.

Alternativ kann das mittels der RFID-Lese- und/oder Schreibeinheit 14 beim Passieren eines RFID-Etiketts empfangene Signal als Sensorsignal zur Überwachung der Etikettenzuführung, oder anders gesagt die RFID-Lese- und/oder Schreibeinheit 14 zugleich als Sensor für die Steuerung des Etikettendruckers verwendet werden. In diesem Fall wird dieses Signal der nicht dargestellten Druckersteuerung zugeführt.

Die Druckersteuerung kann mittels eigens eingerichteter elektronischer Komponenten und/oder Computern in Verbindung mit einem Steuerprogramm implementiert sein.

Damit das zu prüfende Etikett, welches auf der Etikettenträgerbahn ET angeordnet ist, gegenüber der RFID-Lese- und/oder Schreibeinheit 14 eine genau definierte Lage einnimmt, ist im Bereich der RFID-Lese- und/oder Schreibeinheit 14 eine Tunnelführung 16 vorgesehen, welche durch zwei zumindest annähernd parallel zum Förderweg der Etikettenträgerbahn ET verlaufende plattenförmige Elemente gebildet ist. Um ein leichtes Einfädeln der Etikettenträgerbahn ET in die Tunnelführung 16 zu erlauben, weist diese an ihrem zu der Vorratsrolle 10 weisenden Ende einen Einführtrichter 16a auf.

In Förderrichtung der Etikettenträgerbahn ET stromabwärts der Tunnelführung 16 ist eine erste Antriebswalze 18, die unterhalb der Etikettenträgerbahn ET angeordnet ist, und eine Gegendruckwalze 20 vorgesehen, welche oberhalb der Etikettenträgerbahn ET vorgesehen ist.

Sowohl die Achse der Antriebswalze 18 als auch die der Gegendruckwalze 20 verlaufen wiederum horizontal. Die beiden Walzen 18, 20 nehmen die Etikettenträgerbahn ET zwischen sich auf, wie dies in den Figuren 1 und 2 dargestellt ist und können durch Antrieb der Antriebswalze 18 die Etikettenträgerbahn ET fördern. Die Gegendruckwalze 20 sorgt hierbei für einen ausreichenden Kontakt zwischen der Antriebswalze 18 und der Etikettenträgerbahn ET, so dass der Fördervorgang durchgeführt werden kann.

Die Gegendruckwalze 20 ist an einem Haltearm 21 angebracht, welcher in einer Vertikalebene nach oben und unten reversibel verschwenkbar ist, so dass die Gegendruckwalze 20 Unebenheiten an der Etikettenträgerbahn ET, wie sie beispielsweise durch den RFID-Abschnitt des Etiketts hervorgerufen werden, ohne Verringerung der Auflagekraft der Walze 20 ausgleichen kann und dabei eine Beschädigung des RFID-Abschnitts verhindert wird. In einer alternativen Ausführungsform kann zusätzlich anstelle einer Gegendruckwalze 20 ein Walzenpaar (oder ggf. weitere Walzen) quer zur Etikettenträgerbahn ET auf derselben Achse verschieblich angeordnet sein. Je nach Lage des RFID-Abschnitts auf dem Etikett bzw. auf der Trägerbahn ET können die Gegendruckwalzen so justiert werden, dass der RFID-Abschnitt mit keiner von ihnen in Berührung kommt, sondern eine Lücke zwischen zwei der Walzen passiert.

Der Haltearm 21 oder die Gegendruckwalze 20 kann als weitere Alternative zu der Lichtschranke 28 mit einem Druckersensor oder mit einem einfachen Schalter versehen sein, mit dem das Passieren eines erhabenen RFID-Abschnitts auf ein Etikett und/oder des gegenüber der Etikettenträgerbahn erhabenen Etiketts detektiert werden kann. In diesem Fall würde der Haltearm 21 bzw. die Gegendruckwalze 20 als Sensor für die Steuerung des Etikettendruckers verwendet. Auch das so erzeugte Signal kann als Steuersignal zur Überwachung der Etikettenzuführung im Sinne der Erfindung bereitgestellt werden. Die erste Antriebswalze 18 kann aus Stahl mit einer entsprechenden Gummiummantelung hergestellt sein. Ebenfalls besteht die Möglichkeit, dass die erste Antriebswalze 18 aus einem GfK-Werkstoff mit oder ohne einer entsprechenden Gummiummantelung gebildet ist.

In Förderrichtung der Etikettenträgerbahn ET stromabwärts der Antriebswalze 18 findet sich anschließend an die erste Antriebswalze 18 ein Druckkopf 22, welcher oberhalb der Etikettenträgerbahn ET angeordnet ist. Bei dem Druckkopf 22 handelt es sich um einen Thermotransfer-Druckkopf, welcher auf den oder die bedruckbaren Abschnitte des Etiketts durch einen Thermotransferdruck in bekannter Weise aufbringen kann. Unterhalb des Druckkopfes 22 ist eine Druckwalze 23 angeordnet, welche ebenfalls aus einem Stahlkern mit einer Gummiummantelung oder ein GfK-Kern mit und ohne Gummiummantelung gebildet sein kann.

Der Druckkopf 22 kann die in Figur 1 gezeigte Schreibposition einnehmen. Darüber hinaus kann er aber wie in Figur 2 gezeigt, von der Etikettenträgerbahn ET bzw. dem Etikett im RFID-Abschnitt oder in einem leeren Bereich des Druckbildes abgehoben werden, in dem er nach oben verschwenkt wird. Ersteres bewirkt, dass sowohl der Druckkopf 22 als auch der RFID-Abschnitt bzw. die darin auf dem Etikett befindlichen, empfindlichen elektronischen Komponenten, wie die Speichereinheit, Antenne, Kontakte und Verbindungen, beim Durchgang des RFID-Abschnitts durch den Wirkbereich des Druckkopfes vor Beschädigung geschützt werden.

In Förderrichtung der Etikettenträgerbahn ET stromabwärts der Druckkopf 22 schließt sich eine Spendeeinheit 24 an, die oberhalb der Etikettenträgerbahn ET angeordnet eine Führungswalze 25 sowie eine Spendekante 26 aufweist. Die Führungswalze 25, deren Achse zumindest annähernd horizontal verläuft, ist in Förderrichtung der Etikettenträgerbahn ET stromabwärts des Druckkopfes 22 bzw. der Druckwalze 23 angeordnet, wobei sich die Spendekante 26 in Förderrichtung der Etikettenträgerbahn ET stromabwärts an die Führungswalze 25 unmittelbar anschließt.

In Folge der scharfen Umlenkung der Etikettenträgerbahn ET an der Spendekante 26 wird ein aufzubringendes bzw. abzuspendendes Etikett von der Etikettenträgerbahn ET abgehoben und kann dann mittels einer nicht näher dargestellten Appliziereinheit oder von Hand auf den zu kennzeichnenden Gegenstand aufgebracht werden. Die von dem Etikett befreite Etikettenträgerbahn ET, d.h. die leere Etiketteträgerbahn ET wird zu einer weiteren Umlenkkante 30 und von dort auf eine Aufwickelrolle 32, die als Leergutspeichereinheit dient, geführt.

Das erfindungsgemäßen Verfahren bzw. die Betriebsweise des erfindungsgemäßen Etikettendruckers ist wie folgt:

Ein von der Vorratsrolle 10 abgezogener Abschnitt der Etikettenträgerbahn ET, auf den ein zu beschreibendes Etikett aufgebracht ist, wird zunächst nach Umlenkung an der Umlenkwalze 12 der Prüfeinheit bzw. RFID-Lese- und/oder Schreibeinheit 14 zugeführt. Dort wird überprüft, ob der RFID-Abschnitt des Etiketts intakt ist. Falls dies zutrifft, wird dann das Etikett dem Druckkopf 22 zugeführt und die gewünschte Information aufgedruckt. Ggf. kann vorher in der RFID-Schreib- und/oder Leseeinheit ebenfalls Informationen von dem RFID-Abschnitt des Etiketts gelesen und/oder in den RFID-Abschnitt des Etiketts eingeschrieben werden. Vor dem Bedrucken des Etiketts wird der Steuereinheit das - mit welcher Art Sensor auch immer erzeugte - Signal zugeführt, anhand dessen entweder das Einlaufen des Etikettenanfangs oder des RFID-Abschnitts in den Wirkbereich des Druckkopfes 22 anhand der Transportgeschwindigkeit des Etikettenträgerbandes und des Abstands zwischen dem Sensor und dem Wirkbereich ermittelt wird.

Hieraus und unter Zuhilfenahme des programmierbaren Parameters kann die Steuereinheit sowohl den Etikettenanfang als auch den Anfang des RFID-Abschnitts rechnerisch ermitteln. Das Ergebnis wird als Steuersignal einem Antrieb zum Abheben bzw. Aufsetzen des Druckkopfes auf das Etikett zugeführt, wodurch zunächst sichergestellt ist, dass der Druckkopf nur in dem vor dem RFID-Abschnitt befindlichen bedruckbaren Abschnitt (sofern vorhanden; dieser entspricht dem Abstand zwischen Etikettenanfang und dem RFID-Abschnitt) aufgesetzt wird.

Ferner wird unter Zuhilfenahme entweder der vorbestimmten Hubdauer oder des zweiten programmierbaren Parameters der Zeitpunkt berechnet, zu dem der Druckkopf nach Passieren des RFID-Abschnitts wieder auf das Etikett aufsetzt. Die Berechnung kann entweder von dem bestimmten berechneten Etikettenanfang oder dem bestimmten errechneten Anfang des RFID-Bereiches ausgehen, je nachdem, auf welchen Anfang der zweite Parameter bezogen ist, und eine dem zweiten Parameter proportionale Größe addieren. Dieses Ergebnis wird ebenfalls als Steuersignal den Antrieb für den Druckkopf 22 zugeführt.

Das Steuersignal für den Antrieb des Druckkopfes 22 kann zusätzlich von dem Druckbild abhängig sein, wenn beispielsweise ein Foliensparmodus in dem Programmlauf der Steuereinheit fest, d.h. permanent in vorbestimmter Weise, oder beispielsweise durch setzen eines Flag oder Betätigen eines Schalters zuschaltbar vorgesehen ist.

In diesem Fall sitzt der Druckkopf 22 nur dann auf dem Etikett auf, wenn sowohl die Parametersteuerung, das Nicht-Passieren eines RFID-Abschnitts anzeigt, als auch der (zugeschaltete) Foliensparmodus einen nicht-leeren Bereich des Druckbildes (also einen Druckbefehl) anzeigt. Andernfalls würde der Antrieb für den Druckkopf aus dem ein oder anderen Grund kein Steuersignal zum Aufsetzen bzw. ein Steuersignal zum Abheben erhalten.

Schließlich kann die Ausgabe eines Steuersignals zum Abheben des Druckkopfes mit einem Steuersignal zum Anhalten der nicht im Detail dargestellten Transporteinrichtung für das ebenfalls nicht dargestellte Thermotransferfarbband verknüpft sein, so dass immer oder unter zusätzlichen Bedingungen beim Abheben des Druckkopfes von dem Etikett der Weitertransport des Thermotransferfarbbandes gestoppt und beim Aufsetzen wieder angefahren wird.

Anschließend wird die Etikettenträgerbahn ET zusammen mit dem Etikett der Spendeeinheit 24 zugeführt. Durch die scharfe Umlenkung der Etikettenträgerbahn ET an der Spendekante 26, wird das bedruckte und/oder in dem RFID-Abschnitt beschriebene Etikett von der Etikettenträgerbahn ET abgezogen und kann dann von Hand oder durch die nicht näher dargestellte Appliziereinheit erfasst und auf den mit dem Etikett zu kennzeichnenden Gegenstand aufgebracht werden. Die von dem Etikett befreite Etikettenträgerbahn ET wird an der Spendekante 26 umgelenkt und der Umlenkeinrichtung 30 zu der Aufwickelrolle 32 für die leere Etikettenbahn ET geführt und dort aufgewickelt.

Bei der in Fig. 1 und 2 gezeigten Ausführungsbeispiel handelt es sich um eine kombinierte RFID-Lese-/Schreibeinheit mit Etikettendrucker, die für den oben beschriebenen Spenderbetrieb vorgesehen ist. Der Antrieb der Etikettenträgerbahn erfolgt im Spenderbetrieb, d.h bei einer Vorwärtsbewegung der Etikettenträgerbahn, über die Aufwickelrolle 32 und ggf. die Antriebswalze 18. Der Antrieb der Druckwalze 23 wird zumindest bei abgehobenem Druckkopf 22 ausgekuppelt. Die Druckwalze 23 läuft dann leer mit. Die Druckwalze 23 kann ggf. bei aufgesetztem Druckkopf (Druckerbetrieb) auch angetrieben werden. Im Falle der dem Drucker- oder Spenderbetrieb entgegengesetzten Rückwärtsbewegung der Etikettenträgerbahn ET, die beispielsweise für eine genaue Positionierung des RFID-Abschnitts unter der Antenne der Lese- und/oder Schreibeinheit 14 benötigt werden kann, ist die Antriebswalze 23 und ggf. auch die Druckwalze 18 für den Antrieb zuständig. In der Rückwärtsbewegung kann vorteilhafter Weise vorgesehen sein, dass die Steuerung ein Abheben des Druckkopfes veranlasst. Dies ist insbesondere unter Berücksichtigung des nach dem erfindungsgemäßen Verfahren ermittelten Anfangs des RFID-Abschnitts von Vorteil, da gerade bei der Rückwärtsbewegung die Gefahr von Beschädigungen des RFID-Abschnitts und des Druckkopfes 22 sehr groß ist. Das Abheben des Druckkopfes 22 kann entweder generell bei einer der Zuführrichtung im normalen Drucker- oder Spenderbetrieb entgegengesetzten Zuführrichtung (Rückwärtsbewegung des Etikettenträgerbandes ET) abgehoben werden. Wahlweise kann die Steuerung so programmiert werden, dass der Druckkopf 22 bei der Rückwärtsbewegung ferner nur in Abhängigkeit von der vorbestimmten Hubdauer bzw. dem zweiten Parameter abgehoben und in Abhängigkeit von dem ersten Parameter aufgesetzt wird unter Maßgabe, dass die dem Parameter bzw. der Hubdauer proportionalen Abstände eingehalten werden, damit der im Wirkbereich des Druckkopfes befindliche RFID-Abschnitt nicht beschädigt wird.

Die Erfindung ist nicht beschränkt auf solche RFID-Lese-/Schreibeinheiten. Sie findet auch Anwendung in anderen mit Etikettendrucker, insbesondere solchen, die nicht für den Spenderbetrieb vorgesehen sind. Hierin entfällt die Spendeeinheit 24 mit Spendekante 26, sowie die Aufwickelrolle 32. Die Etiketten werden beispielsweise durch ein dem Druckkopf 22 stromabwärts nachgeschaltetes Messer voneinander getrennt oder (manuell) entlang einer quer auf der Etikettenträgerbahn ET vorgesehenen Perforation abgerissen. Bei einer derartigen Vorrichtung erfolgt der Antrieb in der Vorwärtsbewegung wie auch der Rückwärtsbewegung typischerweise sowohl über die Druckwalze 23 als auch die Antriebswalze 18. Auch in diesem Fall kann in der Rückwärtsbewegung kann vorgesehen sein, dass die Steuerung ein Abheben des Druckkopfes veranlasst.

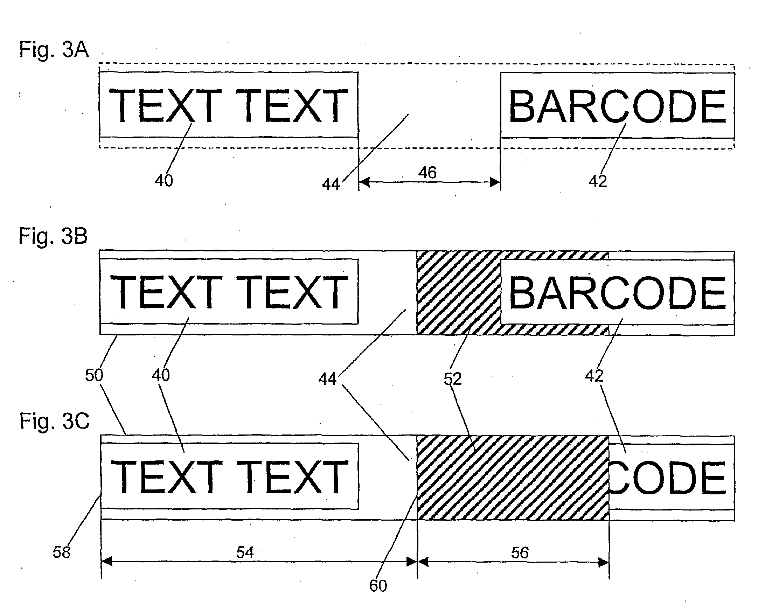

In den Figuren 3A bis 3C ist ein beispielhaftes Druckbild, sowie ein mit diesem Druckbild bedrucktes RFID-Etikett dargestellt, welches im Fall der 3B von einem vorbekannten Etikettendrucker und im Falle der Figur 3C von einem erfindungsgemäßen Etikettendrucker bedruckt wurde.

Das Druckbild gemäß Figur 3A weist einen ersten bedruckten Bereich 40 mit einem lesbaren Text, einen zweiten bedruckten Bereich 42 mit einem maschinenlesbaren Barcode und einen leeren Bereich 44 auf, der eine durch einen Pfeil 46 gekennzeichnete Breite aufweist.

Wird dieses Druckbild auf ein RFID-Etikett 50, wie es in den Figuren 3B und 3C dargestellt ist, mit einem RFID-Abschnitt 52 aufgetragen, so hängt das Ergebnis davon ab, ob ein Etikettendrucker, wie er aus dem Stand der Technik bekannt ist, verwendet wurde, siehe Figur 3B, oder ob das Druckbild mit einem erfindungsgemäßen Etikettendrucker aufgetragen wurde, siehe Figur 3C. Im Fall des bekanten Etikettendruckers sitzt der Druckkopf immer auf dem Etikett auf, wenn der Drucker einen Druckbefehl erhält, d.h. wenn ein bedruckter Bereich vorliegt. Somit liegt der Druckkopf auch im Bereich des RFID-Abschnitts 52 auf dem Etikett auf und kann die darin befindlichen elektronischen Elemente, Verbindungen, Antennen etc. durch den Auflagedruck beschädigen. Ungeachtet dessen kann der Druckkopf in dem leeren Bereich 44 in Abhängigkeit von einem Zuschaltbaren Foliensparmodus abgehoben werden, wenn die Breite 46 des leeren Bereichs 44 nicht zu gering ist und ein Abheben ausscheidet, weil die Dauer zum Anhalten des Thermotransferfarbbandes und zum anschließenden wieder Anfahren in Abhängigkeit von der Transportgeschwindigkeit des Etiketts nicht ausreichend ist.

Demgegenüber wird mit dem erfindungsgemäßen Etikettendrucker der RFID-Bereich 52 nicht bedruckt, da in diesem Bereich der Druckkopf immer von dem Etikett abgehoben ist, vgl. Figur 3C. Somit wird ein Beschädigen der Speichereinheit oder sonstiger elektronischer Komponenten in dem RFID-Bereich grundsätzlich vermieden. Dies hat zur Folge, dass das vorgesehene Druckbild nicht vollständig auf dem Etikett wiedergegeben wird. Der Bediener muss für ein solches Etikett folglich ein anderes Layout wählen. Anders gesagt, schützt der erfindungsgemäße Etikettendrucker den RFID-Abschnitt auch dann, wenn das Druckbild aufgrund einer fehlerhaften Programmierung ein Beschreiben dieses Abschnitts vorsieht.

Das Abheben und Wiederaufsetzen des Druckkopfes vor bzw. nach dem RFID-Abschnitt wird durch eine geeignete Wahl des ersten Parameters, der die durch den Pfeil 54 gekennzeichnete Länge des Etikettenabschnitts vom Anfang 58 des Etiketts 50 bis zum Anfang 60 des RFID-Abschnitts 52 repräsentiert, und des zweiten Parameters, der die durch den Pfeil 56 gekennzeichnete Länge des RFID-Abschnitts 52 repräsentiert, ermöglicht.

## Patentansprüche

1. Verfahren zur Steuerung eines Etikettendruckers zum Bedrucken von einen RFID-Abschnitt (52) aufweisenden Etiketten (50) mit den Schritten:
- Zuführen eines Etiketts (50),
- Aufsetzen eines Druckkopfes (22) des Etikettendruckers auf das in dessen Wirkbereich einlaufende, zu bedruckende Etikett (50),
- Bedrucken des Etiketts (50) mit einem ausgewählten Druckbild,
- Abheben des Druckkopfes (22) von dem Etikett (50),
wobei der Druckkopf (22) abhängig von einem ersten programmierbaren Parameter, der eine erste Information über die Relativlage des RFID-Abschnitts (52) auf dem zu bedruckenden Etikett (50) beinhaltet, von dem Etikett (50) abgehoben bzw. nicht aufgesetzt wird,
wobei der Druckkopf (22) nach einer vorbestimmten Hubdauer vom Abheben bzw. Nicht-Aufsetzen an oder abhängig von einem zweiten programmierbaren Parameter, der eine zweite Information über die Relativlage des RFID-Abschnitts (52) auf dem zu bedruckenden Etikett (50) beinhaltet, nachdem der RFID-Abschnitt (52) den Druckkopf (22) passiert hat, auf das Etikett (50) aufgesetzt wird, und
wobei der Drucker ein Thermotransferdrucker mit einer Transporteinrichtung für ein Thermotransferfarbband ist, wobei die Transporteinrichtung mit dem Abheben des Druckkopfes (22) von dem zu bedruckenden Etikett (50) angehalten und mit dem Aufsetzen des Druckkopfes (22) auf das zu bedruckende Etikett (50) wieder angefahren wird, oder in Abhängigkeit von dem ersten Parameter angehalten und in Abhängigkeit von der vorbestimmten Hubdauer oder dem zweiten Parameter wieder angefahren wird, und wobei die Transporteinrichtung nur dann angehalten wird, wenn eine anhand der Zuführgeschwindigkeit der Etiketten (50) und der Länge eines leeren Bereiches (44) des ausgewählten Druckbildes ermittelte Haltezeit einen vorbestimmten Wert nicht unterschreitet.

2. Verfahren nach Anspruch 1,
**dadurch gekennzeichnet, dass** das Zuführen des Etiketts (50) durch einen Sensor überwacht wird.

3. Verfahren nach Anspruch 2,
**dadurch gekennzeichnet, dass** der Sensor ein Signal ausgibt, anhand dessen das Einlaufen des Etikettenanfangs (60) in den Wirkbereich des Druckkopfes (22) ermittelt wird, von welchem an ein zu dem ersten Parameter proportionaler Abstand eingehalten wird, bevor der Druckkopf (22) von dem Etikett abgehoben wird.

4. Verfahren nach Anspruch 2,
**dadurch gekennzeichnet, dass** der Sensor ein Signal ausgibt, anhand dessen das Einlaufen des RFID-Abschnitts (52) in dem Wirkbereich des Druckkopfes (22) ermittelt wird, bis zu welchem Einlaufen des RFID-Abschnitts (52) ein zu dem ersten Parameter proportionaler Abstand eingehalten wird, bevor der Druckkopf (22) abgehoben wird.

5. Verfahren nach Anspruch 3,
**dadurch gekennzeichnet, dass** von dem Einlaufen des Etikettenanfangs (58) in den Wirkbereich des Druckkopfes (22) an ein zu dem zweiten Parameter proportionaler Abstand eingehalten wird, bevor der Druckkopf (22) auf das Etikett (50) aufgesetzt wird.

6. Verfahren nach Anspruch 3 oder 4,
**dadurch gekennzeichnet, dass** von dem Abheben des Druckkopfes (22) an bzw. von dem Einlaufen des RFID-Abschnitts (52) an ein zu dem zweiten Parameter proportionaler Abstand eingehalten wird, bevor der Druckkopf (22) auf das Etikett (50) aufgesetzt wird.

7. Verfahren mindestens nach Anspruch 2,
**dadurch gekennzeichnet, dass** der Sensor ein optischer Sensor (28) ist.

8. Verfahren nach einem der vorstehenden Ansprüche,
**dadurch gekennzeichnet, dass** der Druckkopf (22) am Anfang des leeren Bereiches (44) des ausgewählten Druckbildes von dem zu bedruckenden Etikett (50) abgehoben wird, soweit er in Abhängigkeit von dem ersten Parameter nicht schon abgehoben und in Abhängigkeit von der vorbestimmten Hubdauer bzw. dem zweiten Parameter nicht wieder aufgesetzt wurde, und am Ende des leeren Bereiches (44) des ausgewählten Druckbildes wieder aufgesetzt wird, soweit er in Abhängigkeit von dem ersten Parameter und von der vorbestimmten Hubdauer bzw. dem zweiten Parameter nicht abgehoben zu sein hat.

9. Verfahren nach einem der vorstehenden Ansprüche,
**dadurch gekennzeichnet, dass** eine Vielzahl von Etiketten (50) auf einer Etikettenträgerbahn (ET) aufeinanderfolgend angeordnet zugeführt werden.

10. Verfahren nach einem der vorstehenden Ansprüche,
**dadurch gekennzeichnet, dass** der Druckkopf 22 bei einer der Zuführrichtung im normalen Druckbetrieb entgegengesetzten Zuführrichtung abgehoben wird.

11. Verfahren nach Anspruch 10,
**dadurch gekennzeichnet, dass** der Druckkopf 22 bei einer der Zuführrichtung im normalen Druckbetrieb entgegengesetzten Zuführrichtung in Abhängigkeit von der vorbestimmten Hubdauer bzw. dem zweiten Parameter abgehoben und in Abhängigkeit von dem ersten Parameter aufgesetzt wird.

12. Thermotransferdrucker zum Bedrucken von einen RFID-Abschnitt aufweisenden Etiketten (50), mit einer programmtechnisch eingerichteten Steuereinheit zum Ausführen des Verfahrens nach einem der Ansprüche 1 bis 11.

## Claims

1. A method of controlling a label printer for imprinting labels (50) having an RFID section (52), comprising the steps of:
- feeding a label (50),
- putting down a print head (22) of the label printer onto the label (50) which is to be imprinted and enters the operating area of the label printer,
- imprinting the label (50) with a selected print image,
- lifting the print head (22) off the label (50),
wherein the print head (22) is lift off or is not put down onto the label (50), respectively, in dependence on a first programmable parameter which includes a first information about the relative position of the RFID section (52) on the label (50) to be imprinted,
wherein the print head (22) is put down onto the label (50) after a predetermined lift-off period starting with the lift-off or non-putting-down, respectively, or in dependence on a second programmable parameter which includes a second information about a relative position of the RFID section (52) on the label (50) to be imprinted, after the RFID section (52) passed the print head (22), and
wherein the printer is a thermal transfer printed having a conveying device for a thermal transfer print ribbon, wherein the conveying device is stopped with lifting the print head (22) of the label (50) to be imprinted and is restarted with putting down the print head (22) onto the label (50) to be imprinted, or is stopped in dependence on the first parameter and is restarted in dependence on the predetermined lift-off period or the second parameter, wherein the conveying device is stopped only if a holding period determined on the basis of a feeding speed of the labels (50) and the length of a blank zone (44) of the selected print image is not shorter than a predetermined value.

2. The method according to claim 1,
**characterized in that** the feeding of the label (50) is monitored by a sensor.

3. The method according to claim 2,
**characterized in that** the sensor outputs a signal which is used to determine the entry of the begin of the label (60) into the operating area of the print head (22) from which on a distance proportional to the first parameter is observed before the print head (22) is lift off the label.

4. The method according to claim 2,
**characterized in that** the sensor outputs a signal which is used to determine the entry of the RFID section (52) into the operating area of the print head (22) until which entry of the RFID section (52) a distance proportional to the first parameter is observed before the print head (22) is lift off.

5. The method according to claim 3,
**characterized in that** from the entry of the begin of the label (58) into the operating area of the print head (22) a distance proportional to the second parameter is observed before the print head (22) is put down onto the label (50).

6. The method according to claim 3 or 4,
**characterized in that** from the lift-off of the print head (22) or from the entry of the RFID section (52) a distance proportional to the second parameter is observed before the print head (22) is put down onto the label (50).

7. The method at least according to claim 2,
**characterized in that** the sensor is an optical sensor (28).

8. The method according to one of the preceding claims,
**characterized in that** the print head (22) is lift off the label (50) to be imprinted at the begin of the blank zone (44) of the selected print image, unless it has not been lift off already in dependence on the first parameter and not yet been put down again in dependence on the predetermined lift-off period or the second parameter, respectively, and is put down again at the end of the blank zone (44) of the selected print image, unless it does not have to be lift off in dependence on the first parameter and the predetermined lift-off period or the second parameter, respectively.

9. The method according to one of the preceding claims,
**characterized in that** a plurality of labels (50) arranged consecutively on a label carrier web (ET) are fed.

10. The method according to one of the preceding claims,
**characterized in that** the print head (22) is lift off when the feeding direction is reverse to the feeding direction of the normal printing operation.

11. The method according to claim 10,
**characterized in that** the print head (22) is lift off in dependence on the predetermined lift-off period or the second parameter, respectively, and is put down in dependence on the first parameter when the feeding direction is reverse to the feeding direction of the normal printing operation.

12. Thermal transfer printer for imprinting labels (50) having an RFID section, the printer having a control unit implemented by software and configured to execute the method according to one of the claims 1 to 11.

## Revendications

1. Procédé de commande d'une imprimante d'étiquettes pour l'impression d'une étiquette (50) ayant une partie (52) RFID, comprenant les stades dans lesquels :
- on apporte une étiquette (50),
- on met une tête (22) d'impression de l'imprimante d'étiquettes sur l'étiquette (50) à imprimer entrant dans la zone d'action de celle-ci,
- on imprime sur l'étiquette une image d'impression sélectionnée,
- on retire la tête (22) d'impression de l'étiquette (50),
dans lequel la tête (22) d'impression est retirée de l'étiquette (50) ou n'y est pas appliquée en fonction d'un premier paramètre programmable, qui contient une première information sur la position relative de la partie (52) RFID sur l'étiquette (50) à imprimer,
dans lequel la tête (22) d'impression est mise sur l'étiquette (50), après que la partie (52) RFID a passé la tête (22) d'impression après une durée de course déterminée à l'avance du retrait ou de la non application ou en fonction d'un deuxième paramètre programmable, qui contient une deuxième information sur la position relative de la partie (52) RFID sur l'étiquette (50) à imprimer, et
dans lequel l'imprimante est une imprimante de transfert thermique ayant un dispositif de transport d'un ruban encré de transfert thermique, le dispositif de transport étant arrêté avec le retrait de la tête (22) d'impression de l'étiquette (50) à imprimer et étant remis en route avec l'application de la tête (22) d'impression sur l'étiquette (50) à imprimer ou étant arrêté en fonction du premier paramètre et étant remise en route en fonction de la durée de la course déterminée à l'avance ou du deuxième paramètre, et dans lequel le dispositif de transport n'est arrêté que si une durée d'arrêt, déterminée au moyen de la vitesse d'apport de l'étiquette (50) et de la longueur d'une zone (44) blanche de l'image d'impression sélectionnée, n'est pas devenue inférieure à une valeur déterminée à l'avance.

2. Procédé suivant la revendication 1, **caractérisé en ce que** l'on contrôle l'apport de l'étiquette (50) par un capteur.

3. Procédé suivant la revendication 2, **caractérisé en ce que** le capteur émet un signal au moyen duquel l'entrée du début (60) de l'étiquette dans la zone d'action de la tête (22) d'impression est déterminée, entrée à partir de laquelle une distance proportionnelle au premier paramètre est respectée avant que la tête (22) d'impression soit retirée de l'étiquette.

4. Procédé suivant la revendication 2, **caractérisé en ce que** le capteur émet un signal au moyen duquel l'entrée de la partie (52) RFID dans la zone d'action de la tête (22) d'impression est déterminée, une distance proportionnelle au premier paramètre étant respectée jusqu'à cette entrée de la partie (52) RFID, avant que la tête (22) d'impression soit retirée.

5. Procédé suivant la revendication 3, **caractérisé en ce que**, à partir de l'entrée du début (58) de l'étiquette dans la zone d'action de la tête (22) d'impression, une distance proportionnelle au deuxième paramètre est respectée, avant que la tête (22) d'impression soit appliquée à l'étiquette (50).

6. Procédé suivant la revendication 3 ou 4, **caractérisé en ce qu'**à partir du retrait de la tête (22) d'impression ou de l'entrée de la partie (52) RFID, une distance proportionnelle
au deuxième paramètre est respectée, avant que la tête (22) d'impression soit appliqué à l'étiquette.

7. Procédé suivant au moins la revendication 2,
**caractérisé en ce que** le capteur est un capteur (28) optique.

8. Procédé suivant l'une des revendications précédentes, **caractérisé en ce que** la tête (22) d'impression est retirée de l'étiquette (50) à imprimer au début de la zone (44) blanche de l'image d'impression sélectionnée, dans la mesure où elle n'a pas, en fonction du premier paramètre, été déjà retirée et, en fonction de la durée de la course déterminée à l'avance ou du deuxième paramètre, elle n'a pas été appliquée à nouveau et est appliquée à nouveau à la fin de la zone (44) blanche de l'image d'impression sélectionnée, dans la mesure où, en fonction du premier paramètre et de la durée de course déterminée à l'avance ou du deuxième paramètre, elle n'a pas à être retirée.

9. Procédé suivant l'une des revendications précédentes, **caractérisé en ce que** l'on apporte une pluralité d'étiquettes (50) qui se succèdent sur une voie (ET) de support d'étiquettes.

10. Procédé suivant l'une des revendications précédentes, **caractérisé en ce que** l'on retire la tête (22) d'impression dans une direction d'apport opposée à la direction d'apport en fonctionnement d'impression normal.

11. Procédé suivant la revendication 10, **caractérisé en ce que** la tête (22) d'impression est, pour une direction d'apport opposée à la direction d'apport en fonctionnement d'impression normal, retirée en fonction de la durée de course déterminée à l'avance ou du deuxième paramètre et est appliquée en fonction du premier paramètre.

12. Imprimante de transfert thermique pour l'impression d'étiquettes (50) ayant une partie RFID, comprenant une unité de commande par programmation pour l'exécution du procédé suivant l'une des revendications 1 à 11.
